# EUROPEAN PATENT SPECIFICATION

(11) **EP 2 804 836 B1**
(45) Date of publication and mention of the grant of the patent: **23.11.2022**
(21) Application number: 12865582.6
(22) Date of filing: 16.01.2012
(51) Int. Cl.: C01G 45/12, C01G 1/02, H01M 4/50, H01M 10/38

(54) **PROCESS FOR PREPARING A CORE-SHELL STRUCTURED LITHTATED MANGANESE OXIDE**
VERFAHREN ZUR HERSTELLUNG EINES KERN-HÜLLE-STRUKTURIERTEN LITHIIERTEN MANGANOXIDS
PROCÉDÉ DE PRÉPARATION D'UN OXYDE DE MANGANÈSE AU LITHIUM À STRUCTURE NOYAU-ENVELOPPE

(43) Date of publication of application: 26.11.2014
(73) Proprietor: Robert Bosch GmbH, 70442 Stuttgart (DE); Fudan University, Shanghai 200438 (CN)
(72) Inventor: XIA, Yongyao, Shanghai 200438 (CN); CUI, Wangjun, Shanghai 200438 (CN); CHEN, Long, Shanghai 200438 (CN); WANG, Yonggang, Shanghai 200438 (CN); JIANG, Rongrong, Shanghai 200335 (CN); DOU, Yuqian, Shanghai 200335 (CN); ZHOU, Longjie, Shanghai 200335 (CN)
(74) Representative: Isarpatent
(86) International application number: PCT/CN2012/070408
(87) International publication number: WO 2013/106983

(56) References cited:
- CN-A- 101 038 965
- CN-A- 101 740 752
- CN-A- 101 859 887
- US-A1- 2011 294 006
- LI C ET AL: "Cathode materials modified by surface coating for lithium ion batteries", ELECTROCHIMICA ACTA, ELSEVIER SCIENCE PUBLISHERS, BARKING, GB, vol. 51, no. 19, 20 May 2006 (2006-05-20), pages 3872-3883, XP028028200, ISSN: 0013-4686, DOI: 10.1016/J.ELECTACTA.2005.11.015 [retrieved on 2006-05-20]
- HIROKAZU KITAURA ET AL: "Improvement of electrochemical performance of all-solid-state lithium secondary batteries by surface modification of LiMn2O4 positive electrode", SOLID STATE IONICS, vol. 192, no. 1, 1 June 2011 (2011-06-01), pages 304-307, XP055201502, ISSN: 0167-2738, DOI: 10.1016/j.ssi.2010.08.019
- XIFEI LI ET AL: "Enhanced cycling performance of spinel LiMn2O4 coated with ZnMn2O4 shell", JOURNAL OF SOLID STATE ELECTROCHEMISTRY ; CURRENT RESEARCH AND DEVELOPMENT IN SCIENCE AND TECHNOLOGY, SPRINGER, BERLIN, DE, vol. 12, no. 7-8, 11 January 2008 (2008-01-11), page 1037, XP019593259, ISSN: 1433-0768
- KWANG HEE JUNG ET AL: "Effects of protecting layer [Li,La]TiOon electrochemical properties of LiMnOfor lithium batteries", JOURNAL OF ALLOYS AND COMPOUNDS, ELSEVIER SEQUOIA, LAUSANNE, CH, vol. 509, no. 12, 18 January 2011 (2011-01-18), pages 4426-4432, XP028366124, ISSN: 0925-8388, DOI: 10.1016/J.JALLCOM.2011.01.110 [retrieved on 2011-01-25]
- ZHAOLIN LIU ET AL: "Improving the high-temperature performance of LiMn 2 O 4 spinel by micro-emulsion coating of LiCoO 2", JOURNAL OF POWER SOURCES, vol. 104, 1 January 2002 (2002-01-01), pages 101-107, XP055201504,
- CHUNBO QING ET AL: "Enhanced cycling stability of LiMnOcathode by amorphous FePOcoating", ELECTROCHIMICA ACTA, ELSEVIER SCIENCE PUBLISHERS, BARKING, GB, vol. 56, no. 19, 25 April 2011 (2011-04-25), pages 6612-6618, XP028239533, ISSN: 0013-4686, DOI: 10.1016/J.ELECTACTA.2011.04.131 [retrieved on 2011-05-12]
- SHI J Y ET AL: "Improved electrochemical performance of AlPO4-coated LiMn1.5Ni0.5O4 electrode for lithium-ion batteries", JOURNAL OF POWER SOURCES, ELSEVIER SA, CH, vol. 195, no. 19, 1 October 2010 (2010-10-01), pages 6860-6866, XP027074572, ISSN: 0378-7753, DOI: 10.1016/J.JPOWSOUR.2010.02.063 [retrieved on 2010-04-08]
- RICHARD M N ET AL: "The effect of ammonia reduction on the spinel electrode materials, LiMn2O4 and Li(Li13Mn53)O4", SOLID STATE IONICS, NORTH HOLLAND PUB. COMPANY. AMSTERDAM; NL, NL, vol. 73, no. 1-2, 1 October 1994 (1994-10-01), pages 81-91, XP025754263, ISSN: 0167-2738, DOI: 10.1016/0167-2738(94)90267-4 [retrieved on 1994-10-01]
- HALIL AHAN ET AL: "A Novel Method to Improve the Electrochemical Performance of LiMn 2 O 4 Cathode Active Material by CaCO 3 Surface Coating", J. MATER. SCI. TECHNOL, vol. 27, no. 5, 1 January 2011 (2011-01-01), pages 415-520, XP055201500,

## Description

### FIELD OF THE INVENTION

The invention relates to a process for preparing a core-shell structured lithiated manganese oxide.

### BACKGROUND OF THE INVENTION

In view of the economic and environmental advantages over commercially available LiCoO₂, spinel LiMn₂O₄ is a potentially attractive alternative cathode material for lithium-ion batteries, especially for large-scale batteries. However, the spinel LiMn₂O₄ suffers from severe capacity fading on cycling, especially at elevated temperatures. The cycling stability of the spinel has been improved by two main categories of approaches: ion doping to stabilize its crystal structure and surface coating to prevent Mn dissolution. It has been demonstrated that Mn dissolution increases with contact area of the spinel with electrolyte. Typically, sol-gel method and precipitation method are used for metal oxides surface coating.

Kenneth A. Walz et al., in "Elevated temperature cycling stability and electrochemical impedance of LiMn2O4 cathodes with nanoporous ZrO2 and TiO2 coatings", Journal of Power Sources, 195 (2010) 4943-4951, describes coating LiMn₂O₄ cathodes with ZrO₂ and TiO₂ by using sol-gel technique.

Xifei Li et al, in "Enhanced cycling performance of spinel LiMn2O4 coated with ZnMn2O4 shell", Journal of Solid State Electrochem, (2008) 12: 851-855, describes coating spinel LiMn₂O₄ with ZnMn₂O₄ shell by mixing LiMn₂O₄ and ZnO in the ball mill, and calcining the mixed powders.

Li C et al describes in "Cathode materials modified by surface coating for lithium ion batteries", ELECTROCHIMICA ACTA, vol. 51, no. 19 (2006-05-20), pages 3872 -3883, a process for preparing a core-shell structured lithiated manganese oxide.

A process for preparing a core-shell structured lithiated manganese oxide is also disclosed by Shi J Y et al in "Improved electrochemical performance of AIPO4-coated LiMn1.5Ni0.5O4 electrode for lithium-ion batteries", JOURNAL OF POWER SOURCES, vol. 195, no. 19 (2010-10-01), pages 6860-6866.

Finally, a process for preparing a core-shell structured lithiated manganese oxide is further described in Richard M N et al in "The effect of ammonia reduction on the spinel electrode materials, LiMn2O4 and Li(Li1/3Mn5/3)O4", SOLID STATE IONIC, vol. 73, no. 1-2 (1994-10-01), pages 81-91.

These methods can reduce the contact area of the spinel with electrolyte and improve cycling stability of the material to a certain extent. However, the resulting coating layers are not uniform and continuous. Instead, there are isolated nano-sized metal oxide particles attached on the surface of spinel particles. The improvement in the cycling performance of the obtained spinel is not satisfactory.

Therefore, there still remains a need for a more useful method for forming a uniform and continuous layer on the surface of spinel particles, to obtain a lithiated manganese oxide material, which exhibites significantly improved cycling stability at elevated temperatures.

### SUMMARY OF THE INVENTION

The present invention provides a process for preparing a core-shell structured lithiated manganese oxide with the features of claim 1.

### BRIEF DESCRIPTION OF THE DRAWINGS

Fig. 1 is SEM image of the core-shell structured lithiated manganese oxide prepared according to Example 1.
Fig. 2 is TEM image of the core-shell structured lithiated manganese oxide prepared according to Example 1.
Fig. 3 is a graph showing comparison of the charge/discharge curves at 60°C of LiMn₂O₄ with (according to Example 1) and without P₂O₅ treatment.
Fig. 4 is graph showing comparison of the cycling stability at 60°C of LiMn₂O₄ cathode materials with (according to Example 1) and without P₂O₅ treatment.

### DETAILED DESCRIPTION OF THE PREFERRED EMBODIMENTS

In one aspect, the present invention provides a process for preparing a core-shell structured lithiated manganese oxide.

The spinel LiMₓMn₂₋ₓO₄ particles, where 0≤x≤1, are commercially available products, or can be prepared by any suitable methods known to a person skilled in the art, such as solid-state reaction method, and co-precipitation method. In a preferred embodiment, the spinel LiMₓMn₂₋ₓO₄ partices are prepared by a solid-state reaction of a stoichiometric mixture of a lithium compound, a manganese compound, and, if appropriate, a compound of M by heat treating. In the solid-state reaction process, the compounds, used as the precursors of the respective metals of lithium, manganese and M, are mixed under ball milling, and heat treated at a temperature of preferably 650°C for 5 h in air, and then cooled. The thus-obtained product is further calcinated at a temperature of 900°C for 10 h in air, and then cooled to room temperature.

As the respective precursors of Li, Mn and M, the lithium compound, the manganese compound and the compound of M are not particularly restricted, and examples thereof may include carbonates, nitrates, hydroxides, oxides of Li, Mn and M. Preferably, lithium carbonate, manganese oxide, and oxide of M are used.

The spinel LiMₓMn₂₋ₓO₄ particles are then subjected to a heat-treatment with a chemical reagent reactive towards the spinel particles in the form of liquid or gas.

By the heat-treatment, the spinel LiMₓMn₂₋ₓO₄ particles react with the liquid or gaseous reactive chemical reagent, to form a continuous and uniform shell layer on the surface of the spinel particles.

As known to a person skilled in the art, spinel LiMₓMn₂₋ₓO₄ suffers from Jahn-Teller distortion during charging-discharging process, which induces disproportion reaction of unstable Mn³⁺ with acid in electrolyte, and the reaction may be further enhanced at elevated temperature. The inventor has found that after treatment with the chemical reagent that can react with the spinel LiMₓMn₂₋ₓO₄, a uniform and continuous layer is formed on the particle surface, and this protective layer, which is not spinel structure, would not suffer from Jahn-Teller distortion. Moreover, it can significantly reduce the contact area of the core with the electrolyte, and thus effectively reduce Mn dissolution into the electrolyte solution.

According to the invention, P₂O₅ is used as the chemical reagent. Preferably, the spinel particles and P₂O₅ powders are mixed in a weight ratio of from 10:1 to 50:1. Then, the heat-treatment is performed at a temperature of from 550 to 650°C for 0.5∼2h. It is contemplated that a shell layer of lithium manganese phosphate is coated on the surface of the spinel particles.

The thus-obtained lithated manganese oxide has a core-shell structure. The core consists of spinel LiMₓMn₂₋ₓO₄ particles, where M is one or more metal ions selected from the group consisting of Li, Mg, Cr, Al, Co, Ni, Zn, Cu, and La, and 0≤x≤1. The shell, which is not spinel structure, has a Mn-containing composition, and is produced through the reaction bewtween the spinel LiMₓMn₂₋ₓO₄ particles and the reactive chemical reagent. The shell has a thickness of 5-20nm.

The core-shell structured lithated manganese oxide has a uniform and continuous layer formed on the surface of the spinel lithiated manganese oxide. The protective layer can significantly reduce the contact area of the spinel with the electrolyte, thus effectively preventing Mn dissolution into the electrolyte solution, and thereby improving the cycling performance of the lithiated manganese oxide.

The core-shell structured lithiated manganese oxide according to the invention can be advantageously used as a cathode material for a lithium-ion battery. The oxide exhibits an improved cycling stability, especially at elevated temperatures.

The following examples further illustrate the process according to the invention, and the characteristics of the prepared compound used as cathode material for lithium ion battery. The examples are given by way of illustration only, and are not intended to limit the invention in any manner.

### Example 1:

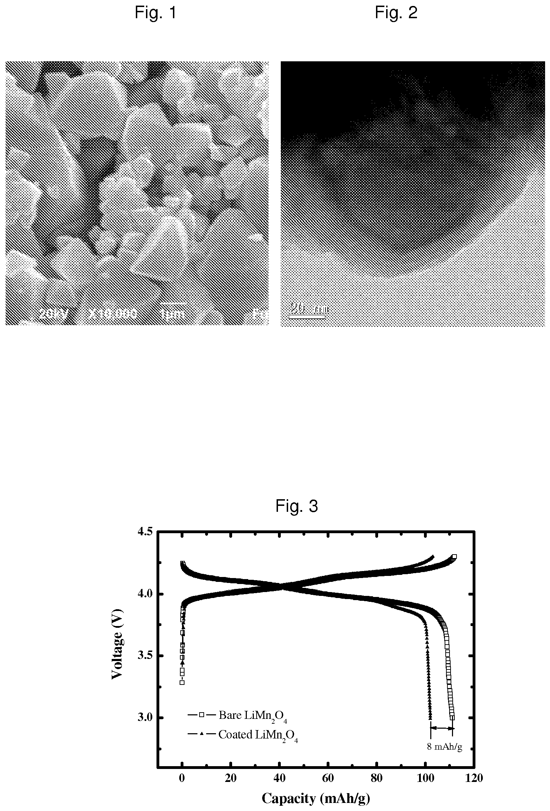

LiMn₂O₄ powder was mixed with P₂O₅ powder in a weight ratio of 10:1, and the mixture was heat treated at 600°C for 1 hour in a sealed reactor. The SEM and TEM images of the resulting compound indicated that a shell layer with a thickness of 10-20nm was continuously and uniformly coated on the lithiated manganese oxide particles (Fig. 1 and Fig. 2).

### Example 2 (which is not comprised by the invention):

LiMn₂O₄ powder was treated with NH₃ at a flow rate of 0.02L/min at 700°C for 1 hour in a sealed reactor. A shell layer with a thickness of 10-20nm was continuously and uniformly coated on the lithiated manganese oxide particles.

### Example 3 (which is not comprised by the invention):

LiMn₂O₄ powder was mixed with triphenyl phosphine powder in a weight ratio of 10:1, and the mixture was heat treated at 200°C for 1 hour in a sealed reactor. A shell layer with a thickness of 10-20nm was continuously and uniformly coated on the lithiated manganese oxide particles.

### Example 4:

Spinel LiLi_{0.1}Mn_{1.9}O₄ was prepared by a solid-state reaction process:
A stoichiometric amount of reagent grade Li₂CO₃ (commercial battery class, micro-size), MnO₂ (commercial product) were mixed by ball-milling. The mixture were heat treated at 650°C for 5 h in air, cooled and mixed again, and then further calcinated at 900°C for 10 h in air, cooled slowly to 600°C and finally cooled to room temperature.

The resulting Li_{1.1}Mn_{1.9}O₄ powder was mixed with P₂O₅ in a weight ratio of 30:1. A heat-treatment was conducted at 600°C in a hermetic reactor for 2 hours. A shell layer with a thickness of 10-20nm was continuously and uniformly coated on the spinel LiLi_{0.1}Mn_{1.9}O₄ particles.

### Cell assembling and electrochemical tests:

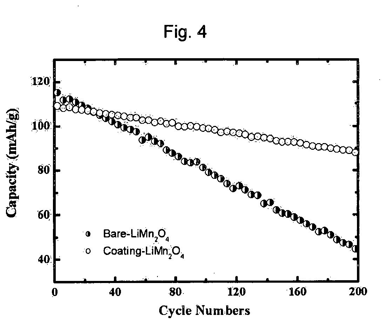

The electrochemical performances of the spinel LiMn₂O₄ with P₂O₅ treatment according to Example 1 and a spinel LiMn₂O₄ without P₂O₅ treatment as a control were tested using R2016-type coin cells. The working electrode was prepared by pasting a slurry mixture of 90wt% of the active material, 4wt% of carbon black, 1wt% of KS-6 and 5wt% PVdF1 in NMP solvent on an aluminum foil . After coating the mixture on aluminum foil, the electrode was dried at 120°C in vacuum for 12 h. The R2016-type coin cell was assembled in a glove box with H₂O and O₂ less than 1 ppm using 1M LiPF₆ in EC-DMC-EMC3 (1:1:1 by volume) as the electrolyte, the spinel oxide electrode as the positive electrode, and Li metal as the negative electrode. The cycling performances were evaluated by using LAND cycler/Arbin battery testing system to charge/discharge cells in the potential range of 3-4.3 V, with the current density for charge/discharge test and cycling test being 1/3C. The test results are shown in Fig. 3 and Fig. 4.

Fig. 3 is a graph showing comparison of the charge/discharge curves at 60°C of LiMn₂O₄ with (according to Example 1) and without P₂O₅ treatment (control). Fig. 4 is graph showing comparison of the cycling stability at 60°C of LiMn₂O₄ cathode materials with (according to Example 1) and without P₂O₅ treatment (control).

As shown in Fig. 4, the capacity retention of the treated spinel after 200 cycles was about 82% at 60°C; while the capacity retention of the untreated spinel after 200 cycles was much smaller (about 50%). From Fig. 3 and Fig. 4, it can be seen that the treated spinel LiMn₂O₄ particles according to the invention exhibit significantly improved cycling stability at elevated temperature of 60°C, while the capacity is reduced only by as little as 8mAh/h, compared to the untreated spinel LiMn₂O₄.

## Claims

1. A process for preparing a core-shell structured lithiated manganese oxide, comprising the steps of providing spinel LiMₓMn₂₋ₓO₄ particles, where M is one or more metal ions selected from the group consisting of Li, Mg, Cr, Al, Co, Ni, Zn, Cu, and La, and O≤x≤1, as core particles, and subjecting the spinel particles to a heat-treatment with a chemical reagent reactive towards the spinel LiMₓMn₂₋ₓO₄ particles in the form of liquid or gas to form a continuous and uniform shell layer on the surface of the core particles, wherein the Shell is not spinel structure
wherein the heat-treatment is performed at a temperature of from 100 to 800° C for 0.5∼5h, **characterized in that**
P₂O₅ is used as the chemical reagent, and
the heat-treatment is performed at a temperature of from 550 to 650°C for 0.5∼2h.

2. The process according to claim 1, wherein the spinel LiMₓMn₂₋ₓO₄ particles are prepared by a solid-state reaction of a stoichiometric mixture of a lithium compound, a manganese compound, and, if appropriate, a compound of M by heat treating.

3. The process according to claim 2, wherein the lithium compound is selected from the group consisting of lithium carbonates, lithium nitrates, lithium hydroxides, and lithium oxides.

4. The process according to claim 2, wherein the manganese compound is selected from the group consisting of manganese carbonates, manganese nitrates, manganese hydroxides, and manganese oxides.

5. The process according to claim 2, wherein the compound of M is selected from the group consisting of carbonates, nitrates, hydroxides, and oxides of M.

## Patentansprüche

1. Verfahren zur Herstellung eines lithiierten Magnesiumoxids mit Kern-Schale-Struktur, bei dem man Spinell-LiMₓMn₂₋ₓO₄-Teilchen, wobei M für ein oder mehrere Metallionen aus der Gruppe bestehend aus Li, Mg, Cr, Al, Co, Ni, Zn, Cu und La steht und 0 ≤ x ≤ 1, als Kernteilchen bereitstellt und die Spinellteilchen einer Wärmebehandlung mit einem gegenüber den Spinell-LiMₓMn₂₋ₓO₄-Teilchen reaktiven chemischen Reagens in Form von Flüssigkeit oder Gas unterwirft, um eine kontinuierliche und einheitliche Schalenschicht auf der Oberfläche der Kernteilchen zu bilden, wobei die Schale keine Spinellstruktur aufweist, wobei die Wärmebehandlung bei einer Temperatur von 100 bis 800 °C über einen Zeitraum von 0,5∼5 h durchgeführt wird,
**dadurch gekennzeichnet, dass**
P₂O₅ als das chemische Reagens verwendet wird und die Wärmebehandlung bei einer Temperatur von 500 bis 650 °C über einen Zeitraum von 0,5∼2 h durchgeführt wird.

2. Verfahren nach Anspruch 1, bei dem die Spinell-LiMₓMn₂₋ₓO₄-Teilchen durch eine Festkörperreaktion einer stöchiometrischen Mischung einer Lithiumverbindung, einer Manganverbindung und gegebenenfalls eine Verbindung von M durch Wärmebehandeln hergestellt werden.

3. Verfahren nach Anspruch 2, bei dem die Lithiumverbindung aus der Gruppe bestehend aus Lithiumcarbonaten, Lithiumnitraten, Lithiumhydroxiden und Lithiumoxiden ausgewählt wird.

4. Verfahren nach Anspruch 2, bei dem die Manganverbindung aus der Gruppe bestehend aus Mangancarbonaten, Mangannitraten, Manganhydroxiden und Manganoxiden ausgewählt wird.

5. Verfahren nach Anspruch 2, bei dem die Verbindung von M aus der Gruppe bestehend aus Carbonaten, Nitraten, Hydroxiden und Oxiden von M ausgewählt wird.

## Revendications

1. Procédé pour la préparation d'un oxyde de manganèse lithié à structure de type noyauenveloppe, comprenant les étapes de fourniture de particules de spinelle LiMₓMn₂₋ₓO₄, où M est un ou plusieurs ions métalliques choisis dans le groupe constitué par Li, Mg, Cr, Al, Co, Ni, Zn, Cu et La, et 0 ≤ x ≤ 1, en tant que particules de noyau, et la soumission des particules de spinelle à un traitement thermique avec un réactif chimique réactif envers les particules de spinelle LiMₓMn₂₋ₓO₄ sous la forme d'un liquide ou d'un gaz pour former une couche d'enveloppe continue et uniforme sur la surface des particules noyau, l'enveloppe n'étant pas de structure de spinelle le traitement thermique étant réalisé à une température allant de 100 à 800 °C pendant 0,5 à 5 h,
**caractérisé en ce que**
P₂O₅ est utilisé en tant que le réactif chimique, et
le traitement thermique est réalisé à une température allant de 550 à 650 °C pendant 0,5 à 2 h.

2. Procédé selon la revendication 1, les particules de spinelle LiMₓMn₂₋ₓO₄ étant préparées par une réaction à l'état solide d'un mélange stoechiométrique d'un composé de lithium, d'un composé de manganèse, et, le cas échéant, un composé de M par traitement thermique.

3. Procédé selon la revendication 2, le composé du lithium étant choisi dans le groupe constitué par des carbonates de lithium, des nitrates de lithium, des hydroxydes de lithium et des oxydes de lithium.

4. Procédé selon la revendication 2, le composé du manganèse étant choisi dans le groupe constitué par des carbonates de manganèse, des nitrates de manganèse, des hydroxydes de manganèse et des oxydes de manganèse.

5. Procédé selon la revendication 2, le composé de M étant choisi dans le groupe constitué par des carbonates, des nitrates, des hydroxydes et des oxydes de M.
